# EUROPÄISCHE PATENTSCHRIFT

(11) **EP 0 466 856 B1**
(45) Veröffentlichungstag und Bekanntmachung des Hinweises auf die Patenterteilung: **18.05.1994**
(21) Anmeldenummer: 91902651.8
(22) Anmeldetag: 25.01.1991
(51) Int. Cl.: B65D 41/34, B29C 45/44, B29C 45/00, B29C 37/00

(54) **SCHRAUBKAPPE MIT GARANTIEBAND UND VERFAHREN ZU IHRER HERSTELLUNG**
SCREW-CAP WITH WARRANTY RING AND METHOD FOR MAKING IT
BOUCHON FILETE AVEC BANDE DE GARANTIE ET METHODE DE FABRICATION

(30) Priorität: 02.02.1990 CH 341/90
(43) Veröffentlichungstag der Anmeldung: 22.01.1992
(73) Patentinhaber: Crown Cork AG, 4153 Reinach (CH)
(72) Erfinder: BREUER, Hans-Werner, CH-4242 Laufen (CH); BARTL, Thomas, CH-4123 Allschwil (CH); KIRCHGESSNER, Michael, CH-7852 Binsen (CH)
(74) Vertreter: Wenger, René
(86) Internationale Anmeldenummer: CH9100022
(87) Internationale Veröffentlichungsnummer: WO9111369

(56) Entgegenhaltungen:
- EP-A- 0 133 348
- EP-A- 0 337 046
- EP-A- 0 365 136
- DE-U- 8 806 295
- FR-A- 2 416 849
- FR-A- 2 619 552
- GB-A- 2 195 325
- US-A- 4 846 361

## Beschreibung

Die Erfindung betrifft eine Schraubkappe zum Verschliessen einer Behältermündung gemäss dem Oberbegriff von Anspruch 1. Derartige Schraubkappen haben eine Garantiefunktion, indem ein erstmaliges Entfernen der Kappe durch ein Abreissen des Garantiebandes angezeigt wird. Die Rückhalteelemente rasten beim erstmaligen Aufschrauben der Kappe unter dem Behälterwulst ein, können jedoch beim erstmaligen Abschrauben nicht mehr über den Wulst gleiten, so dass das Garantieband abreisst.

Es sind bereits zahlreiche verschiedene Ausgestaltungen von Rückhalteelementen bekannt. So werden z.B. nach innen ragende Zungen oder auch Wulste verwendet, welche das Garantieband beim erstmaligen Abschrauben blockieren. Es ist auch bekannt, die ganze Wand des Garantiebandes im Querschnitt derart auszubilden, dass es eine Mehrzahl von nach innen gerichteten Vertiefungen bildet, wie z.B. in der EP-A-337 046 beschrieben.

Durch die DE-U-88 06 295 ist eine gattungsmässig vergleichbare Schraubkappe bekannt geworden, bei der die Rückhalteelemente als Einzelvorsprünge ausgebildet sind, welche eine Profilierung aus mehreren angeformten Zacken aufweisen. Die Zacken haben schräg abfallende Flankenflächen, welche der Aufschraubrichtung der Schraubkappe zugekehrt sind.

Wie die EP-A-133 348 zeigt, war es bei einer anderen Gattung von Schraubkappen auch bereits bekannt, auf der Innenseite des Garantiebandes im Abstand einzelne Sperrzähne anzuordnen, welche in korrespondierende Sperrzähne am Behälterhals einrasten und welche das Garantieband beim erstmaligen Abschrauben blockieren.

Ein Problem bei allen gattungsmässig vergleichbaren Verschlusskappen besteht darin, dass die Rückhalteelemente einerseits ausreichende Flexibilität aufweisen müssen, damit ein Aufschrauben der Kappe möglich ist, dass sie aber andererseits doch auch massiv und steif genug sein müssen, um ein Abreissen des Garantiebandes beim Abschrauben herbeizuführen. Schliesslich muss die ganze Anordnung auch noch in einem Spritzgusswerkzeug mit axial öffnenden Teilen leicht entformbar sein, so dass Hinterschneidungen nur beschränkt zulässig sind.

Es ist daher eine Aufgabe der Erfindung, eine Schraubkappe der eingangs genannten Art zu schaffen, bei welcher die Rückhalteelemente sich ohne übermässige Dehnung des Garantiebandes leicht über den Behälterwulst schieben lassen, wobei eine zuverlässige Blockierung des Garantiebandes gewährleistet ist, sobald die Schraubkappe ihre Endposition erreicht hat. Diese Aufgabe wird erfindungsgemäss mit einer Schraubkappe gelöst, welche die Merkmale im Anspruch 1 aufweist.

Die sich in Aufschraubrichtung verjüngenden Keile setzen der Aufschraubbewegung nur einen geringen Widerstand entgegen. Das Gleitverhalten in Verschliessrichtung ist besonders vorteilhaft, während die zurückspringenden Stirnseiten der Keile in Abschraubrichtung eine blockierende Wirkung ausüben. Da die Keile auf die Innenwand aufgesetzt sind, verstärken sie zusätzlich die Steifigkeit des Garantiebandes, womit die Manipulierbarkeit des Bandes stark verringert wird.

Die Einrasttiefe des ganzen Rückhalteelements wird vor allem dadurch verstärkt, dass an den dem Kappenboden zugewandten Seitenflanken der Keile über die Keilfläche gegen die Mittelachse hinausragende Materialwulste angeordnet sind. Im Gegensatz zum übrigen Körper der Keile sind diese Randwulste relativ flexibel und können beim erstmaligen Aufsetzen der Kappe leicht zurückbiegen.

Die beiden Seitenflanken der Keile sind relativ zur Innenwand vorzugsweise angeschrägt. Dies bewirkt bei der unteren, gegen den unteren Rand des Garantiebandes gerichteten Seitenflanke eine Zentrierung des Bandes beim Aufsetzen und eine schonende Dehnung über dem Behälterwulst. Bei der gegen den Kappenboden gerichteten Seitenflanke bewirkt die Anschrägung eine leichtere Entformbarkeit im Spritzgusswerkzeug.

Besonders vorteilhaft sind die dem Kappenboden zugewandten Seitenflanken der Keile relativ zu einer quer zur Mittelachse der Schraubkappe verlaufenden Ebene unter einem Winkel angeschrägt. Dabei kann diese Schräglage der Seitenflanken etwa der Gewindesteigung am Schraubgewinde entsprechen. Diese Konfiguration hat zur Folge, dass die Seitenflanken nicht sprunghaft unter dem Wulst einrasten, sondern entsprechend der gewählten Steigung unter den Wulst gleiten.

Form und Anzahl der Keile werden jeweils den spezifischen Verhältnissen bzw. den Abmessungen der übrigen Schraubkappe angepasst. Vorzugsweise erstrecken sich die Keile aber über wenigstens die Hälfte der Gesamthöhe des Garantiebandes. Durch diese axiale Ausdehnung der Rückhalteelemente wird eine gute Versteifung des Garantiebandes erreicht. Die maximale Keildicke kann wenigstens gleich oder grösser sein als die übrige Wandstärke des Garantiebandes. Der Abstand zwischen den einzelnen Keilen sollte so dimensioniert sein, dass die einzelnen Keile eine optimale Wirkung erzielen können und dass doch noch eine gewisse Umfangselastizität aufrecht erhalten wird. Der Abstand zwischen den einzelnen Keilen sollte daher wenigstens der Gesamtlänge eines Keiles entsprechen.

Die oben erwähnten Materialwulste an den Seitenflanken der Keile werden besonders vorteilhaft unmittelbar beim Entformen der Werkzeuge erzeugt, ohne dass für die Wulste eine Negativform an einem Werkzeugteil vorgesehen werden muss. Die dem Kappenboden zugewandten Seitenflanken der Keile müssen lediglich derart geneigt sein, dass sich beim Zurückziehen des die Innenwand des Garantiebandes bildenden inneren Werkzeugteiles über die Keile hinweg im noch nicht völlig erstarrten Zustand des Kunststoffmaterials die Materialwulste durch Materialquetschung von selbst bilden. Je nach der gewählten Neigung kann eine etwas grössere oder kleinere Materialdeformation erzielt werden.

Ein Ausführungsbeispiel der Erfindung ist in den Zeichnungen dargestellt und wird nachstehend genauer beschrieben. Es zeigen:
- Figur 1: einen Querschnitt durch eine auf eine Behältermündung aufgesetzte Schraubkappe mit den Merkmalen der Erfindung,
- Figur 2: eine Ansicht von unten auf die Schraubkappe gemäss Figur 1,
- Figur 3: einen Querschnitt durch das Garantieband in stark vergrössertem Massstab, und
- Figur 4: eine Draufsicht auf einen Keil in Axialrichtung der Schraubkappe.

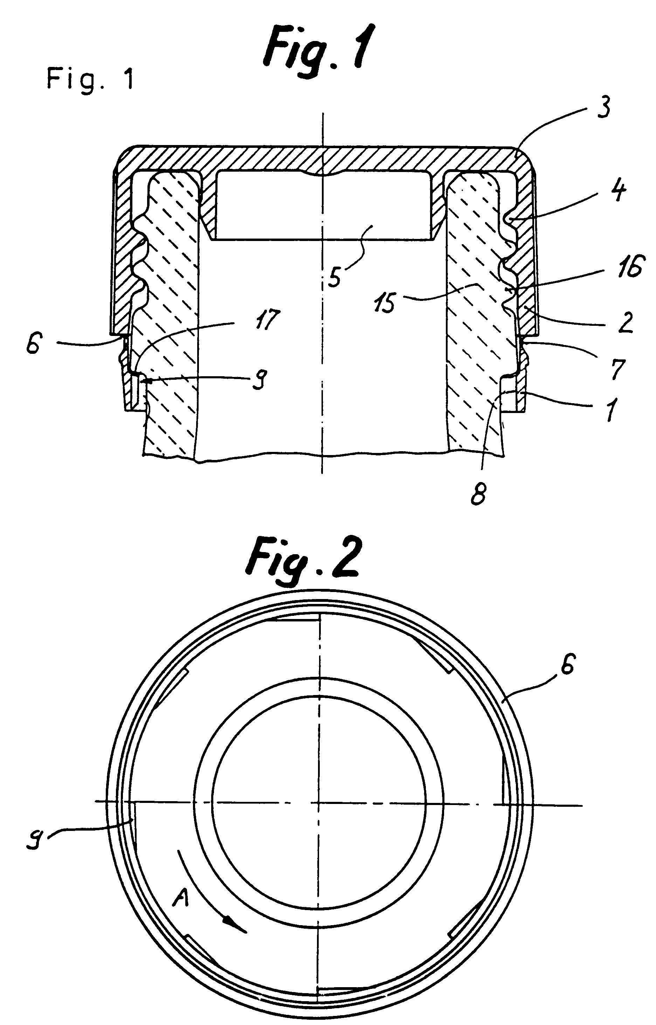

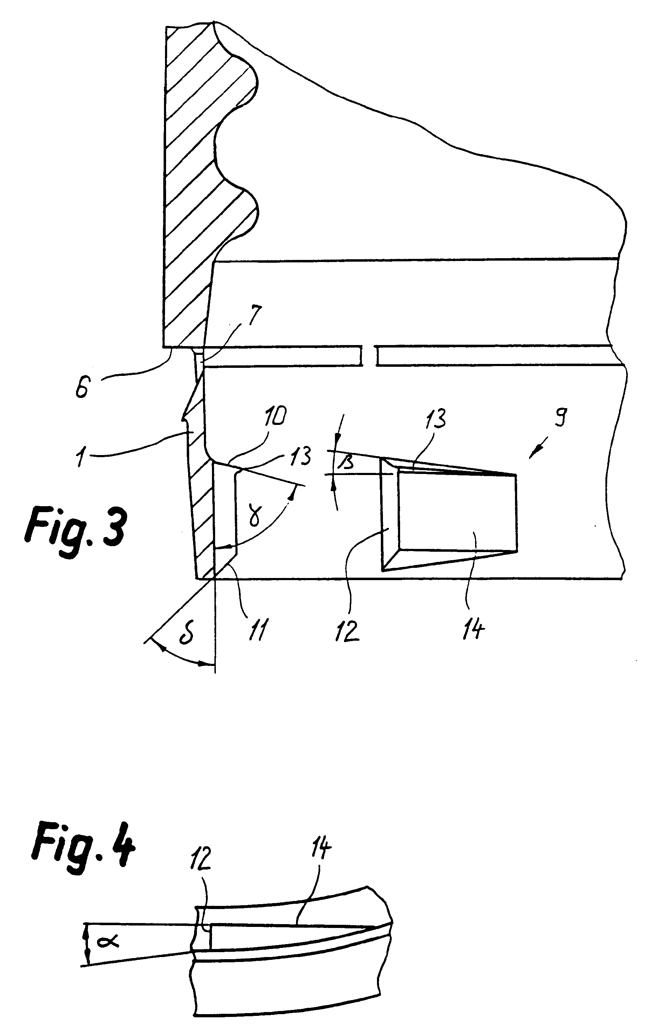

Die Figuren 1 und 2 zeigen die Schraubkappe bereits in mehrfacher Vergrösserung. Sie besteht auf an sich bekannte Weise aus einer etwa zylindrischen Kappenseitenwand 2 mit einem Innengewinde 4. Am Kappenboden 3 ist eine Innendichtung 5 angeordnet, die aber eine beliebige andere Konfiguration aufweisen kann oder die z.B. auch durch eine Dichtungseinlage ersetzt werden könnte. Am unteren Kappenrand 6 ist an einer Mehrzahl von abreissbaren Verbindungsstegen 7 ein Garantieband 1 einstückig angeordnet.

An der Innenwand 8 des Garantiebandes sind in regelmässigen Abständen mehrere Keile 9 aufgesetzt, die sich in Aufschraubrichtung A verjüngen. Diese Keile dienen nach dem erstmaligen Aufsetzen der Kappe als Rückhalteelemente, welche unter einem umlaufenden Behälterwulst 17 an einer Behältermündung 15 einrasten. Die Behältermündung ist mit einem Aussengewinde 16 versehen und die Schraubkappen werden mit Hilfe spezieller Aufsetzvorrichtungen auf bekannte Weise auf die gefüllten Behälter aufgeschraubt.

Wie aus Figur 2 ersichtlich ist, können beispielsweise in Umfangsrichtung acht Keile 9 in regelmässigen Abständen angeordnet sein. Bei Verschlusskappen für Mineralwasserflaschen hat sich diese Anzahl als besonders vorteilhaft erwiesen. Je nach Gesamtumfang des Garantiebandes können selbstverständlich auch mehr oder weniger Keile angeordnet sein. In bestimmten Fällen wäre es sogar denkbar, dass die Keile nicht in regelmässigen Abständen angeordnet sind. Einzelheiten der Keilkonfiguration sind aus den Figuren 3 und 4 ersichtlich. Demgemäss haben die einzelnen Keile einen Keilwinkel Alpha, der ein schonendes Einrasten gewährleistet. Die Keilfläche 14 kann eben oder gekrümmt ausgebildet sein. Die Keilstirnseite 12 verläuft vorzugsweise radial nach aussen, sie könnte aber ebenfalls angeschrägt sein.

Die obere, dem Kappenboden 3 zugewandte Seitenflanke 10 eines Keils ist unter einem Winkel Gamma zur Innenwand des Garantiebandes angeschrägt. Diese Schräglage von weniger als 90° gewährleistet ein axiales Ausstossen der Kappe vom inneren Wekzeugformteil, trotz der durch die Seitenflanke 10 gebildeten Hinterschneidung. Die untere Seitenflanke 11 ist unter einem etwas spitzeren Winkel Delta angeschrägt, so dass die Keile gut über den Behälterwulst gleiten.

Die oberen Seitenflanken 10 verlaufen nicht parallel zum unteren Rand 6 der Kappe, sondern unter einem Winkel Beta schräg zu einer quer zur Mittelachse der Kappe verlaufenden Ebene. Diese Steigung kan etwa dem Steigungswinkel des Innengewindes 4, also ca. 2 Grad 30 Minuten entsprechen. Die Seitenflanke 10 gleitet so besonders schonend unter den Behälterwulst 17.

Im Uebergangsbereich zwischen der Seitenflanke 10 und der Keilfläche 14 kann ein Materialwulst 13 angeordnet sein, der gegen das Zentrum über die Keilfläche hinausragt. Dieser Wulst verbessert die Rückhalteeigenschaften der Keile, ist aber nicht unbedingt erforderlich. Der Wulst 13 kann ohne spezielle Negativform am Werkzeug durch die richtige Wahl des Winkels Gamma erzeugt werden. Beim Zurückziehen des inneren Werkzeugteiles im noch relativ plastischen Zustand der Formgussmasse bildet sich je nach Dimensionierung der Keile eine Materialabquetschung, die einen brauchbaren Wulst ergibt. Die Schraubkappe wird aus den bekannten Kunststoffmaterialien wie z.B. Polyethylen oder Polypropylen hergestellt.

## Patentansprüche

1. Schraubkappe zum Verschliessen einer Behältermündung mit einem am unteren Rand der Kappe angeordneten, abreissbaren Garantieband (1), das dazu bestimmt ist, bei aufgesetzter Kappe einen ringförmigen Wulst (17) an der Behältermündung zu untergreifen und das zu diesem Zweck auf der Innenwand (8) mehrere, gegen die Mittelachse der Schraubkappe gerichtete Rückhalteelemente aufweist, die beim erstmaligen Aufsetzen der Kappe beim Erreichen der Endposition unter dem Wulst einrasten und die sich beim erstmaligen Abschrauben in axialer Richtung unter dem Wulst abstützen, dadurch gekennzeichnet, dass die Rückhalteelemente als auf die Innenwand (8) aufgesetzte Keile (9) ausgebildet sind, die sich in Aufschraubrichtung (A) verjüngen und dass an den dem Kappenboden zugewandten Seitenflanken (10) der Keile über die Keilfläche (14) gegen die Mittelachse hinausragende Materialwulste (13) angeordnet sind.

2. Schraubkappe nach Anspruch 1, dadurch gekennzeichnet, dass die beiden Seitenflanken (10, 11) der Keile (9) relativ zur Innenwand (8) angeschrägt sind.

3. Schraubkappe nach Anspruch 1 oder 2, dadurch gekennzeichnet, dass die dem Kappenboden (3) zugewandten Seitenflanken (10) der Keile (9) relativ zu einer quer zur Mittelachse der Schraubkappe verlaufenden Ebene unter einem Winkel angeschrägt sind.

4. Schraubkappe nach Anspruch 3, dadurch gekennzeichnet, dass die dem Kappenboden zugewandten Seitenflanken der Keile eine Steigung aufweisen, die etwa der Gewindesteigung am Schraubgewinde entspricht.

5. Schraubkappe nach einem der Ansprüche 1 bis 4, dadurch gekennzeichnet, dass sich die Keile (9) über wenigstens die Hälfte der Gesamthöhe des Garantiebandes (1) erstrecken.

6. Schraubkappe nach einem der Ansprüche 1 bis 5, dadurch gekennzeichnet, dass die maximale Keildicke wenigstens gleich oder grösser ist als die übrige Wandstärke des Garantiebandes.

7. Schraubkappe nach einem der Ansprüche 1 bis 6, dadurch gekennzeichnet, dass die einzelnen Keile in Umfangsrichtung in einem Abstand zueinander angeordnet sind, der wenigstens der Gesamtlänge eines Keiles entspricht.

8. Schraubkappe nach einem der Ansprüche 1 bis 7, dadurch gekennzeichnet, dass in Umfangsrichtung wenigstens acht Keile angeordnet sind.

9. Verfahren zum Herstellen einer Schraubkappe nach Anspruch 1 aus Kunststoffmaterial in einem Spritzgusswerkzeug mit in axialer Richtung relativ zueinander verschiebbaren inneren und äusseren Werkzeugteilen zur Bildung des Formhohlraumes, dadurch gekennzeichnet, dass die dem Kappenboden zugewandten Seitenflanken (10) der Keile (9) derart geneigt sind, dass sich beim Zurückziehen des die Innenwand des Garantiebandes bildenden inneren Werkzeugteiles über die Keile hinweg im noch nicht völlig erstarrten Zustand des Kunststoffmaterials Materialwulste (13) bilden, welche über die Keilfläche (14) gegen die Mittelachse hinausragen.

## Claims

1. A screw cap for closing the mouth of a container comprising a guarantee strip (1) which is arranged at the lower edge of the cap and which can be torn away and which is intended when the cap is fitted in position to engage under an annular bead (17) at the mouth of the container and which for that purpose has on the inside wall (8) a plurality of retaining elements which are directed towards the centre line of the screw cap and which, when the cap is first fitted in position, engage under the bead when the end position is reached and which, when the screw cap is first unscrewed, bear in the axial direction against the underneath of the bead, characterised in that the retaining elements are in the form of wedges (9) which are disposed on the inside wall (8) and which taper in the screwing-on direction and that disposed at the side flanks (10) of the wedges, that face towards the end portion of the cap, are material ridges (13) which project towards the centre line beyond the wedge face (14).

2. A screw cap according to claim 1 characterised in that the two side flanks (10, 11) of the wedges (9) are bevelled relative to the inside wall (8).

3. A screw cap according to claim 1 or claim 2 characterised in that the side flanks (10) of the wedges (9), that are towards the end portion (3) of the cap, are bevelled at an angle relative to a plane extending transversely to the centre line of the screw cap.

4. A screw cap according to claim 3 characterised in that the side flanks of the wedges, that are towards the end portion of the cap, have a gradient which approximately corresponds to the pitch of the screwthread.

5. A screw cap according to one of claims 1 to 4 characterised in that the wedges (9) extend over at least half the total height of the guarantee strip (1).

6. A screw cap according to one of claims 1 to 5 characterised in that the maximum wedge thickness is at least equal to or larger than the rest of the wall thickness of the guarantee strip.

7. A screw cap according to one of claims 1 to 6 characterised in that the individual wedges are arranged at a spacing from each other in the peripheral direction, which corresponds at least to the total length of a wedge.

8. A screw cap according to one of claims 1 to 7 characterised in that at least eight wedges are disposed in the peripheral direction.

9. A process for producing a screw cap according to claim 1 from plastics material in an injection moulding tool comprising inner and outer tool portions which are displaceable relative to each other in the axial direction, for forming the mould cavity, characterised in that the side flanks (10) of the wedges (9), that are towards the end portion of the cap, are so inclined that upon retraction of the inner tool portion that forms the inside wall of the guarantee strip, beyond the wedges, when the plastics material is still in a not entirely hardened condition, material ridges (13) are formed which project towards the centre line beyond the wedge face (14).

## Revendications

1. Couvercle à vis pour la fermeture d'un orifice de récipient, comportant une bande de garantie (1) apte à se rompre qui est disposée sur le bord inférieur du couvercle, qui est destinée à venir en prise, lorsque le couvercle est posé, sous un bourrelet annulaire (17) prévu sur l'orifice de récipient et qui comporte à cet effet, sur la paroi intérieure (8), plusieurs éléments de retenue, dirigés vers l'axe médian du couvercle à vis, qui viennent s'encliqueter sous le bourrelet lors de la première pose du couvercle, lorsque celui-ci a atteint la position terminale, et qui s'appuient dans le sens axial sous ledit bourrelet lors du premier dévissage, caractérisé en ce que les éléments de retenue sont conçus comme des coins (9) posés sur la paroi intérieure (8) et s'effilant dans le sens de vissage (A), et en ce qu'il est prévu, sur les flancs latéraux (10) des coins tournés vers le fond du couvercle, des bourrelets de matière (13) dépassant de la surface de coin (14) en direction de l'axe médian.

2. Couvercle à vis selon la revendication 1, caractérisé en ce que les deux flancs latéraux (10, 11) des coins (9) sont inclinés par rapport à la paroi intérieure (8).

3. Couvercle à vis selon la revendication 1 ou 2, caractérisé en ce que les flancs latéraux (10) des coins (9) tournés vers le fond du couvercle (3) sont inclinés suivant un certain angle par rapport à un plan transversal à l'axe médian du couvercle à vis.

4. Couvercle à vis selon la revendication 3, caractérisé en ce que les flancs latéraux des coins tournés vers le fond du couvercle présentent une inclinaison qui correspond approximativement au pas de vis prévu sur le filetage.

5. Couvercle à vis selon l'une des revendications 1 à 4, caractérisé en ce que les coins (9) s'étendent sur la moitié au moins de la hauteur totale de la bande de garantie (1).

6. Couvercle à vis selon l'une des revendications 1 à 5, caractérisé en ce que l'épaisseur maximale des coins est au moins égale ou supérieure au reste de l'épaisseur de paroi de la bande de garantie.

7. Couvercle à vis selon l'une des revendications 1 à 6, caractérisé en ce que les différents coins sont disposés dans le sens périphérique suivant un espacement qui correspond au moins à la longueur totale d'un coin.

8. Couvercle à vis selon l'une des revendications 1 à 7, caractérisé en ce qu'il est prévu au moins huit coins dans le sens périphérique.

9. Procédé pour la fabrication d'un couvercle à vis selon la revendication 1 en matière plastique, dans un outil de moulage par injection comportant des éléments d'outil intérieur et extérieur aptes à être déplacés dans le sens axial l'un par rapport à l'autre pour former la cavité du moule, caractérisé en ce que les flancs latéraux (10) des coins (9) tournés vers le fond du couvercle sont inclinés de telle sorte que lors de l'extraction de l'élément d'outil intérieur formant la paroi intérieure de la bande de garantie par dessus les coins, alors que la matière plastique n'est pas encore à l'état complètement solidifié, il se forme des bourrelets de matière (13) qui dépassent de la surface de coin (14) en direction de l'axe médian.
